(19)

**Europäisches Patentamt**
**European Patent Office**
**Office européen des brevets**

(11)　**EP 4 575 699 A1**

(12)　# EUROPEAN PATENT APPLICATION

(43) Date of publication:
　　**25.06.2025　Bulletin 2025/26**

(21) Application number: **23383311.0**

(22) Date of filing: **18.12.2023**

(51) International Patent Classification (IPC):
　　*G05D 1/648* (2024.01)　　*G05D 1/243* (2024.01)
　　*A01B 79/00* (2006.01)　　*G01S 17/00* (2020.01)
　　*G06V 20/00* (2022.01)　　*G05D 105/15* (2024.01)
　　*G05D 107/20* (2024.01)　　*G05D 109/10* (2024.01)
　　*G05D 111/10* (2024.01)

(52) Cooperative Patent Classification (CPC):
　　**G05D 1/2435; A01B 69/001; G01S 17/00;**
　　**G05D 1/6486; G06V 20/10;** A01B 69/008;
　　G05D 2105/15; G05D 2107/21; G05D 2109/10;
　　G05D 2111/10

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**KH MA MD TN**

(71) Applicant: **Consejo Superior de Investigaciones**
　　**Cientificas**
　　**28006 Madrid (ES)**

(72) Inventors:
　• **EMMI, Luis Alfredo**
　　**28500 Arganda Del Rey (Madrid) (ES)**
　• **GONZÁLEZ DE SANTOS, Pablo**
　　**28500 Arganda Del Rey (Madrid) (ES)**

(74) Representative: **Herrero & Asociados, S.L.**
　　**Edificio Aqua - Agustín de Foxá, 4-10**
　　**28036 Madrid (ES)**

(54)　**METHOD AND SYSTEM FOR IMPROVED GUIDING OF ROBOTS IN CROP FIELDS**

(57)　It is proposed a method and system for detecting crop rows (during early growth stage of the crop) and guide autonomous robots in agricultural tasks by following said detected crop rows. The proposed solution enables the use of mobile autonomous robots in crop fields, without requiring excessive modification of the work environment (such as altering the crop field to accommodate the robots), and without relying on precise maps or GNSS navigation (that must be constantly updated due to the continuous change of the field conditions).The solution proposed in this invention comprises three main tasks or sub-procedures (in other words, this procedure can be divided into 3 fundamental parts or phases): 1) 4D vision for crop identification using object detection, 2) crop row identification, and 3) Guiding of the robot (by Entry-Exit points detection).

**EP 4 575 699 A1**

**Description**

**TECHNICAL FIELD**

The present invention relates to a method and system for detecting crop rows and guide autonomous robots in agricultural tasks by following said detected crop rows. In particular, it refers to crop rows detection and guidance of robots in early-stage crops, especially for laser weeding (early-stage crops is the usual cultivation stage when laser weeding is applied).

**BACKGROUND**

Herbicides are chemical components used in agriculture to manage weeds and increase crop yields, but they present several adverse effects. One is associated with environmental impact. For example, herbicides can reach the soil and contaminate water sources, producing water pollution. Herbicides can also impact non-target plants, affecting biodiversity. In addition, excessive and repeated use of herbicides contributes to developing herbicide-resistant weeds requiring more potent or alternative herbicides. Soil health is also affected by some herbicides. Continued use of herbicides can disrupt the soil microbiome, reducing beneficial microbial populations and potentially leading to soil degradation and reduced fertility over time.

Another critical negative impact of herbicides is on human and animal health. Herbicide inhalation, ingestion, or skin contact can lead to adverse health effects, including skin and eye irritation, respiratory issues, and in some cases, more severe health conditions, including cancer, birth defects and endocrine system disruption. A necessary consequence of herbicides is their detrimental effects on pollinators (bees, butterflies, etc.), which play a crucial role in crop pollination and maintaining ecosystem balance.

To mitigate these problems, institutions and governments are promoting integrated weed management strategies (crop rotation, mechanical weed control, targeted herbicide use, etc.) and new weed control techniques. One of these techniques is to apply high-power laser doses on the weed meristems to stop plant growth. This evolving technology requires (i) a high-power laser source, (ii) a perception system to identify the weed meristems, (iii) a targeting system to direct the laser beam onto the meristems, and (iv) a vehicle (manned or autonomous) to move the equipment throughout the operation field.

There are several laser technologies, but two main ones are being applied for weed management: carbon dioxide ($CO_2$) and fibre laser technology. Both require that the weeds stay in an early stage of development (1 to 4 leaves in maize, for example). Otherwise, the weed plant can survive a laser dose.

Laser weeding systems result in heavy equipment because they need heavy electronic components and cooling systems. Therefore, laser technology for weeding is usually applied using vehicles that can be human-crewed or autonomous, the latter being the current trend.

Guiding autonomous vehicles, or generally speaking autonomous robotic systems or just autonomous robots, in agriculture fields is a tough operation because the conditions of agricultural fields (which affect to the vehicle navigation) are constantly changing (soil state, weather conditions, luminosity, states of crop growth, etc.).

Autonomous robots in a field are typically guided using Global Navigation Satellite Systems (GNSS), which have become crucial technologies for navigation, positioning with centimetre accuracy thanks to Real-Time kinematics technology (RTK-GNSS), and timing applications. Nevertheless, they also exhibit some disadvantages that have to be considered for autonomy in agriculture, such as

- Signal Blockage: various factors such as buildings, trees, mountains, and other obstacles can block or weaken the GNSS satellite signals; Multipath Errors: signals can bounce off reflective surfaces like buildings, causing multipath errors where the receiver receives multiple delayed signals. Signal blockage and multipath errors can result in positioning inaccuracies and reduced reliability.
- Interference and Spoofing: GNSS signals are susceptible to interference from natural sources (such as a solar activity) and intentional interference (jamming or spoofing), leading to incorrect positioning information.
- Dependence on External Infrastructure: GNSS relies on a network of satellites and ground-based infrastructure for signal transmission and precise timing. Any disruptions or failures in this infrastructure can impact GNSS performance. In many cases, GNSS systems also require internet connectivity, which allows receiving the correction signal, and, in many farms, internet connectivity is not guaranteed given its remoteness with populated places.
- Limited Accuracy in Some Scenarios: in deep forests or mountainous regions, vegetation or terrain can hinder GNSS signals, affecting positioning accuracy.
- Accurate and updated maps: to use GNSS navigation, it is necessary to have accurate maps in advance, which identify the positions of the crop rows. This situation is not always available and ensured.
- Furthermore, for using an autonomous vehicle on a row crop, the vehicle's controller needs to know the position of every row with respect to the robot's position to prevent stepping on and, therefore, destroying them. This means the user has to provide the position of every row in the field, which, in large fields, can be impracticable.

In conclusion, an alternative system to GNSS would be beneficial for navigation in crop rows, such as perception systems based on computing vision.

Many perception systems are based on computing vision for detecting crop rows and navigating without stepping on them. They are usually based only on RGB (Red, Green and Blue) cameras and can detect crop rows in an advanced stage of plant growth. However, current systems are useless when applied to guide an autonomous vehicle in a laser weeding task because of the required stage of weed development.

Hence, it is necessary a new solution which allow a precise and optimum autonomous robotic navigation in a crop field for agricultural tasks (such as laser weeding), especially in early-stages crops (e.g. crop plants with 1 to 4-8 leaves), solving the problems and withdraws of the existing solutions.

## SUMMARY

The limitations found in prior art techniques are generally solved or circumvented, and technical advantages are generally achieved, by the disclosed embodiments which provide a method and system for guiding autonomous vehicles (robots) in early-stage crop field rows, mainly for performing agricultural tasks as laser-weeding applications.

The proposed solution enables the use of mobile autonomous robots in crop fields, without requiring excessive modification of the work environment (such as altering the crop field to accommodate the robots, as is necessary for some of the existing solutions), and without relying on precise maps or GNSS navigation (that must be constantly updated due to the continuous change of the field conditions).

One of the major differences between the proposed solution and the prior art is that this solution is useful and successful even on the early growth stage of the crop. Most prior art propose solutions that can be successfully applied when the crop plant has already grown considerably, and conventional/classic perception systems can identify the crop and extract lines (with poor results in early stages of the crop). However, the proposed invention is especially useful during this early growth stage, when crop plants begin to emerge (e.g. one leaf up to 4 - 8 leaves), a phase where existing inventions struggle to provide a suitable precise solution.

Furthermore, the proposes invention is useful in wide-row crops, where there is a significant separation between crop rows (e.g. between 0.5 and 0.75 cm), and in the early growth stage, plants have approximately for example 10 cm separation within the same row (these separation distances depend on the type of crop and the region of planting).

This challenge is addressed by employing object identification strategies, in contrast to the majority of strategies that rely on segmentation. This solution enables each plant to be individually identified, with each plant representing a point or set of points within the point cloud of the 3D perception system.

Another major difference with the prior art is the procedure used to extract (detect) crop lines, which also requires a new perspective as it differs from the majority of existing works. In the detection of crops, there is typically continuity in the line. However, in the case of early growth stages, this continuity is not appreciable (due to the small size of the plants). Additionally, not only do crops emerge during this stage, but also weeds, posing a significant challenge in identifying crop lines. Weeds can interfere with line detection when conventional segmentation-based strategies, as described in other works, are employed.

Furthermore, during the early growth stage, plant locations are not perfectly aligned due to various factors in seed placement tasks: (i) the planting machine may not necessarily move perfectly in a straight line; (ii) seeds may encounter small rocks or other elements causing displacement as they fall; (iii) not all plants emerge at exactly the same speed, especially those near the edges of fields. This variability results in non-uniformity in the field and crop line, leading to empty spaces or gaps in the lines, presenting a greater challenge in line detection. To address these challenges, the proposed invention uses a probability-based algorithm, allowing for the extraction of atypical crop identifications, correction of plant position variabilities, and estimation of not only the equation of the straight line representing crop lines but also the entry and exit points to the field. This last feature implies that while most works related to crop line tracking aim to identify the line when the vehicle is on it, the present invention seeks to go a step further. That is, it not only accomplishes that task (identify the line) but also identifies the entry and exit points, generating a metric coordinate usable by the robot to reach these points without the need to have them pre-stored in a map.

These and other aspects and advantages of the invention will be apparent from and elucidated with reference to the embodiments described hereinafter.

According to a first aspect, the present invention proposes a method for detecting crop rows and guide an autonomous robot in an agricultural task in an early-stage crop field, the method being performed by at least one electronic processor and comprising the following steps:

a) Obtaining at least one color image taken by a color camera and at least one image taken by a Time of Flight, ToF, camera, both cameras located onboard the autonomous robot and where the capture of images by both cameras is synchronized;

b) Identifying crop plants by analyzing the at least one color image, using an object detection technique resulting in an estimated location of the crop plants in the at least one color image defined as a bounding box for each identified crop plant;

c) Obtaining a point cloud of crop locations, $PC_{vf}$, by associating points of the point cloud from the at least one ToF camera image with the pixels identified as belonging to a crop plant;

d) Transforming the position of points of $PC_{vf}$ to an autonomous robot's absolute reference frame, ARF;

e) Classifying the points referenced to the ARF, $PC_{arf}$, in clusters taking into consideration the proximity between the points;

f) Merging the obtained clusters based on certain characteristics of the clusters, where said characteristics comprises their position and/or orientation with respect to the robot's orientation;

g) From the merged clusters, estimating updated guiding coordinates to be followed by the robot; and

h) Determining if the robot has exited the field and if it has not exited the field, repeat the method steps from step a).

In an embodiment, step g) comprises:

g1) From the merged clusters, determining the furthest left and right points at the front and the closest left and right points at the rear of the robot and storing them;

g2) Compare said determined points with previously stored points and assigning weights to each stored point, where said assigned weight depend on the distance and orientation differences between the new stored points and the already stored points;

g3) Selecting the stored points with the highest weight as the entry and exit points of the crop row where the robot is located;

g4) Updating the coordinates to be followed by the robot taking into account the selected exit point.

In an embodiment, step g) comprises:

g1) Extracting estimated crop rows from the merged clusters, using linear regression algorithms;

g2) Determining the validity of the extracted crop rows, wherein a crop row is considered valid when it has a correlation with respect to the orientation of the robot higher than a preestablished first threshold and its position with respect to the origin of the robot's reference system is at a distance less than a second threshold, wherein said second threshold depends on the pre-established width between the crop rows;

g3) Taking the closest valid rows to the right and to the left of the robot and estimating a central line, which is the updated guiding coordinates to be followed by the robot.

According to a second aspect, the present invention proposes a system for performing any of the above stated method. More specifically, the present invention proposes a system for detecting crop rows and guide an autonomous robot in an agricultural task in an early-stage crop field, the system comprising:

- A color camera located onboard the autonomous robot;
- A ToF camera located onboard the autonomous robot, where the captures of images of the ToF camera and the color camera is synchronized;
- One or more processors (located onboard the robot or remotely from the robot) configured to:

    a) Obtain at least one color image taken by the color camera and at least one image taken by a Time of Flight, ToF, camera;

    b) Identify crop plants by analyzing the at least one color image, using an object detection technique resulting in an estimated location of the crop plants in the at least one color image defined as a bounding box for each identified crop plant;

    c) Obtain a point cloud of crop locations, $PC_{vf}$, by associating points of the point cloud from the at least one ToF camera image with the pixels identified as belonging to a crop plant;

    d) Transform the position of points of $PC_{vf}$ to an autonomous robot's absolute reference frame, ARF;

    e) Classify the points referenced to the ARF, $PC_{arf}$, in clusters taking into consideration the proximity between the points;

    f) Merge the obtained clusters based on certain characteristics of the clusters, where said characteristics comprises their position and/or orientation with respect to the robot's orientation;

    g) From the merged clusters, estimate updated guiding coordinates to be followed by the robot; and

h) Determine if the robot has exited the field and if it has not exited the field, go back to step a).

In a last aspect of the present invention, a computer program is disclosed, comprising computer program code means adapted to perform the steps of the described method, when said program is run on processing means, said processing means being for example a computer, a digital signal processor, a field-programmable gate array (FPGA), an application-specific integrated circuit (ASIC), a micro-processor, a micro-controller, or any other form of programmable hardware. In other words, a computer program comprising instructions, causing a computer executing the program to perform all steps of the described methods, when the program is run on a computer. A digital data storage medium is also provided for storing a computer program comprising instructions, causing a computer executing the program to perform all steps of the disclosed methods when the program is run on a computer.

The invention relates to a method, a system and a digital storage medium as defined by the independent claims. The dependent claims define advantageous embodiments.

## BRIEF DESCRIPTION OF THE DRAWINGS

To complete the description that is being made and with the objective of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a schematic block diagram of the 4D vision sub-procedure for crop identification, according to one embodiment of the present invention.

Figure 2 shows a schematic block diagram of the sub-procedure for crop row identification, according to one embodiment of the present invention.

Figure 3 shows a schematic block diagram of the sub-procedure for entry-exit points detection and row transition, according to one embodiment of the present invention.

Figure 4 shows a schematic crop field description based on a topological map of the filed where an embodiment of the present invention can be applied.

## DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention propose a method and system for improved guiding of autonomous vehicles (also called autonomous robots) in early-stage crop fields, for performing agricultural tasks, mainly laser-weeding applications.

The solution proposed according to an embodiment of this invention, comprises three main tasks or sub-procedures (in other words, this procedure can be divided into 3 fundamental parts or phases): (1) 4D vision for crop identification, (2) Crop row identification, and (3) Guiding of the robot (by Entry-Exit points detection), phases 2 and 3 operating based at least on the outputs of the previous one. Each of these 3 sub-procedures will be explained in detail below.

Each of these tasks or sub-procedures is carried out by a sub-system (also called module or unit). Each of these sub-systems comprises the electronic devices necessary for each task (for example, a RGB camera or ToF camera in the case of the first sub-procedure) and an electronic processor (or a set of processors) responsible for performing the activities comprised in each tasks. This processor(s) can be onboard the robot or can be located remotely from the robot receiving the data from the robot trough a telecommunication networks (a mobile telephone communication network or any other type of telecommunication network)

Although conceptually these modules are independent entities (and will be treated as such for a better explanation), physically, they may be implemented using the same processor or set of processors. That is, in one embodiment, there will be a processor (or set of them) performing each task, but in other embodiments, the same processor (or set of them) may perform several of these tasks.

**Vision sub-procedure for crop detection**

As it will be shown later, crop identification in the present embodiments is done by employing, among other tools, object identification strategies, in contrast to the majority of existing solution strategies that rely on segmentation for crop identification and crop row extraction.

Both approaches (segmentation vs. object detection) will be briefly explained and discussed hereby and the reasons why object detection has been used in the proposed solution will be presented:

In recent years, and thanks to technological advances to perform parallel processing, deep learning approaches have shown great promise for crop row identification. Two strategies stand out based on Convolutional Neural Networks: pixel-based networks (segmentation) and object-based networks (object detection). These are advanced computer vision techniques that are used, in general, to analyse and understand visual data. Below are some features that describe both strategies:

Object Detection: Object detection is primarily used to locate and classify objects within an image or video frame. It's about identifying the presence of objects and their positions, but it doesn't provide information about the exact boundaries (contour) of the objects. This strategy is generally faster to train and run than segmentation strategies, but it can struggle when objects overlap or are close to each other, as it may not distinguish between them.

Segmentation: Image segmentation, particularly semantic segmentation, is focused on pixel-level categorisation, assigning each pixel in an image to a specific object or region class. It provides a more detailed understanding of object shapes and their boundaries, which can be useful in applications like image editing or medical imaging. This strategy can handle overlapping objects better as it assigns each pixel to a specific category, but it can be computationally expensive, especially for high-resolution images, making it slower compared to object detection. Moreover, creating pixel-wise segmentation masks for training data is labour-intensive and requires much manual effort.

The main differences between Object Detection and Segmentation may be:

1. Information Granularity: Object detection provides coarse information (bounding boxes and labels), while segmentation offers fine-grained pixel-level information.
2. Overlap Handling: Segmentation is better at handling overlapping objects since it assigns each pixel to a specific class.
3. Use Cases: Object detection is suitable for scenarios where objects must be identified and located quickly, such as autonomous driving or object tracking. Segmentation is more appropriate when precise object boundaries and fine-grained analysis are required, such as in medical image analysis or image editing.
4. Annotation: Annotating data for segmentation is more time-consuming and challenging than object detection, as it requires creating detailed masks.

Moreover, methodologies such as colour-based segmentation, edge detection, and Hough transform are some of those commonly strategies used in recent years for crop detection (the selection of a specific methodology has been made depending on the specific characteristics of the crop, the vision system equipment, and the requirements of the agricultural application). However, these strategies have shown outstanding deficiencies when generalising the problem, especially when the lighting conditions, type, and state of cultivation are variants.

For all these reasons, in the case of crop identification for navigation tasks of a mobile robot that carries an implement for the execution of high-power laser-based treatment, the use of object identification strategies has been selected. This strategy also allows the number of target crops that the navigation system can manage to be expanded, thanks to its ease of making notes. And, thanks to its inference speed, object detection strategies can facilitate more robust and reliable navigation.

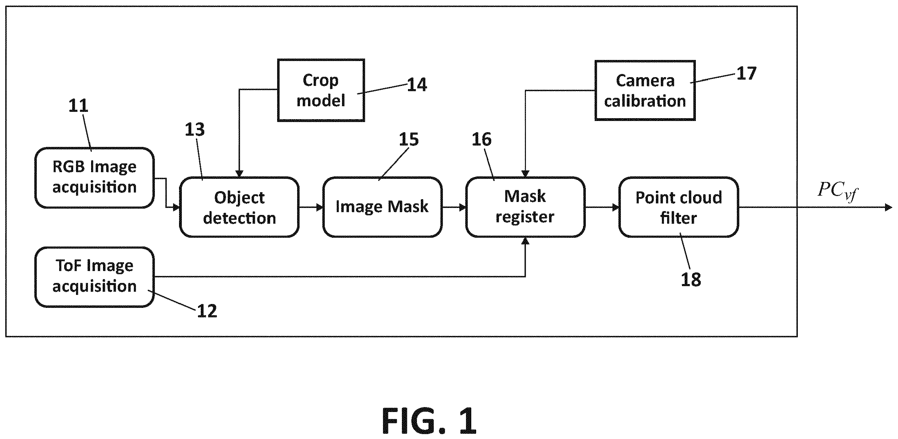

Now, this (sub-)procedure will be detailly explained, with the assistance of figure 1. Figure 1 represents a diagram identifying the steps (actions) executed within the procedure for data acquisition and identification of the target crop plants. This is only a non-limitative example and, in other embodiments, only some of the steps are performed or different steps are performed or the steps are performed in a different way:

The procedure begins with the acquisition of images of the crop plants by the two cameras that make up the 4D vision system: (i) a color camera, usually a RGB camera (11), and (ii) a ToF (Time of Flight) camera (12).

An absolute reference frame (ARF) with the origin attached to the robot is defined (with the x-axis along the longitudinal robot's axis, the z-axis pointing up, and the y-axis forming an orthogonal reference frame). This will be the robot's reference frame. As it will be explained later, the soil plane may also be identified with respect to the ARF (for example, using a system based on machine vision or a LIDAR system).

The colour camera is placed onboard the robot (preferably in a known position with respect to the ARF) facing the crop to take pictures of the crop. A suitable position is 0.5 meters above ground level and with an angle of 22° with respect to the horizontal plane (this is only an example and any other position can be used).

A range imaging device, a ToF camera (and optionally also a LIDAR system) for measuring distances to the crop are placed also onboard the robot (preferably in a known position with respect to the ARF), facing the crop. A ToF (Time of Flight) camera is a type of depth-sensing camera that determines distances to objects by measuring the time it takes for light to travel from the camera to the subject and back.

This technology relies on emitting light pulses and measuring the time it takes for the reflected light to return. This device therefore provides the sub-system with a third dimension (3D) information.

Generally, speaking, there are some ToF cameras manufacturers (for example, IFM) which uses Photonic Mixer Device (PMD) technology; these cameras are known for their ability to capture depth information quickly and with relatively high accuracy. Other manufacturers (for example, HELIOS) utilise in their ToF cameras, Flash LiDAR technology which is a type of ToF technology that relies on time-of-flight measurement by emitting short pulses of light and measuring the time it takes for the light to bounce back. Experience indicates that the first type of cameras are more robust and reliable in conditions of intense and changing light, as is the case of tasks in the agricultural environment, which is an open space.

In an embodiment, a RGB camera TRI032S-CC, Triton 3.2MP from Lucid Vision Labs, with a lens SV-04514V of 4.5mm and Angle of View 59.4 x 79 from VS Technology is used. And, in an embodiment, a Time-of-Flight camera O3D305, with 352 x 264 resolution, from IFM electronic, configured to observe between 0.5 up to 3 meters, are used. These are only examples, and any other RGB and ToF cameras can be used.

Optionally, a LIDAR MRS1104C-111011 with opening angle of Horizontal (275°) and Vertical (7.5°) over 4 scan levels and a 10% reflectance over 16 m from Sick is used. This is only an example, and any other LIDAR device (or no LIDAR device at all) camera can be used.

Optionally, a pan-tilt system can also be used in the cameras.

The acquisition of the images from both cameras is synchronised, where the timestamp when both images were acquired, is known. Generally speaking, synchronizing different sensors (in this particular case a color camera and a ToF camera), involves aligning their data acquisition processes to ensure that captured data corresponds accurately in time (and space). This synchronization is important to be able to locate the crop plants detected in the color image with respect to the robot's reference system. There are different synchronization methodologies and any one can be used here, although the two most commonly used are (a) Hardware-Based Synchronization (hardware-triggering mechanisms where one sensor triggers the other to capture data simultaneously), and (b) Software-Based Synchronization (timestamps are assigned to data frames captured by each sensor, and later the software search for the data from both sensors that are closest in time). In an embodiment the Software-Based Synchronization is used (this is only an example and any type of synchronization methodologies can be used).

The images from the RGB camera are analysed using Object Detection (13) to identify the crop plants. As previously stated, Object Detection is a computer vision technique based on Machine Learning (Artificial intelligence), usually on Convolutional Neural Networks, for detection of objects on an image. For this, the Object Detection unit needs as an input parameter in the initialisation stage the required model (14) to be able to identify the target crop on the image.

This model (e.g. a convolutional neural network model) is trained so it is capable of detecting crop plants in an early growth state. In an embodiment, is trained with a database buildup of a set of images taken in different fields (for example maize fields) in a stage of early growth (i.e. a few days after sprouting and that have, for example, up to two leaves). With this information, a model is created using pre-trained weights by default. Once the model is obtained, it is used to execute the inference process, i.e. the identification of the crop plants in the images while the robotic vehicle navigates over the field. This model is usually updated with more recent information extracted from the current crop detection the robot is performing. Any suitable object detection technique can be used (for example, Yolo or any other).

Once the image has been analysed by Object Detection, a set of descriptors identifying the crops detected in the image are obtained. These descriptors indicate the coordinates in pixels of the image where the crops are located. With these descriptors, a mask image (15) is generated, where for example, the white pixels represent the centroid of the bounding boxes that describe the location of the crops on the RGB image, and the rest of the mask is black, representing the background.

With the mask image, a registration (16) is carried out between said image and the information from the ToF camera. For this step, it is necessary to have the calibration parameters (17) between both cameras (RGB and ToF) a priori, in order to assign the value corresponding to the pixels in the RGB image to the points in the point cloud of the ToF camera. Only the points of the point cloud representing the pixels with white values are kept; the rest are discarded.

In other words, the result of the object detection is the location of the plants in the image defined as a bounding box (the border's coordinates on the X and Y axes that enclose the image pixels associated to a detected crop plant) and, subsequently, for each plant detected, its 3D position is extracted based on the information from the ToF camera using the centroid of those bounding boxes. That's why it is said that this sub-procedure provides 4D vision information, because it provides 3D information (x, y, z) plus the color information (4th dimension).

For this step, it is necessary that the RGB and ToF cameras are previously calibrated, to be able to associate pixels in the image with position (x, y, z) in the ToF point cloud. Calibrating RGB and Time-of-Flight (ToF) cameras may involve aligning their intrinsic and extrinsic parameters to ensure accurate fusion of data from both sensors. This calibration aims to compensate, for example, for differences in their perspectives, resolutions, distortions, and positions relative to the scene. In an embodiment, to perform this calibration, the following steps were followed (this is only an example, and the calibration can be perfomed using any other technique):

RGB camera Intrinsic Calibration: focal length, principal point, and lens distortion coefficients were determining by using standard calibration patterns like a checkerboard, and software tools like OpenCV, which provided well defined methods (e.g., calibrateCamera) to estimate these parameters.

Extrinsic Calibration: the relative pose estimation was determined (translation and rotation) between the RGB and ToF cameras based on the 3D model of the structure developed for installation on the robot. This allows for aligning the captured data in the same coordinate system

As it will be explained later in the phase 2, once the points that represent the crop plants with reference to the ToF camera have been obtained, it is performed a transformation to convert these points to the robot's reference system. For this, it is necessary to know precisely the position and orientation of the camera with respect to the origin of the robot's reference system.

Moreover, since the same pixel value can represent several points in the point cloud, filtering may be performed (18), discarding identical values of positions and values less than or equal to zero.

In an embodiment, once the position of each plant with respect to the robot have been obtained, these previous steps related to image acquisition may be carried out several times (for example, 5 epochs or any other number) before continuing with the next step, in order to enrich the detection. In other words, the steps starting from the acquisition of the images to the conversion to the points in the ToF camera representing the crop plants are repeated several time to enrich crop plant detection.

In the case that several images are taken (the image acquisition is carried out several times), in an embodiment object detection is made in all the RGB images and pixels in the images are associated with points in the ToF point cloud for each image. All the points obtained are stored and later there is a point filtering methodology (18), where the obtained points are compared and if they are very close to each other, they are filtered.

Once there are enough representative points for the positions of each crop, a set of processes is carried out that detection of the crop lines (phase 2, crop row identification).

As output of this first phase of conditioning the sensor data, a point cloud (PC) of crop locations based on the 4D vision system frame (vf) is obtained: named $PC_{vf}$. This point cloud represents the input value of the next phase (sub-procedure).

**Crop row identification**

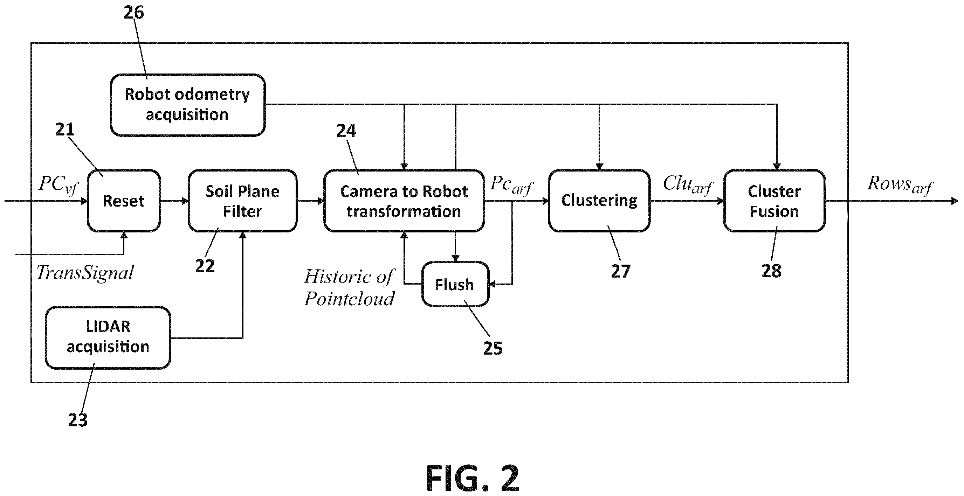

Now, this (sub-)procedure will be detailly explained, with the assistance of figure 2. Figure 2 represents a diagram identifying the steps (actions) executed within the procedure of crop row identification. This is only a non-limitative example and, in other embodiments, only some of the steps are performed or different steps are performed or the steps are performed in a different way:

This phase has two main parameters as inputs: the point cloud representing the positions of each target crop based on the camera reference frame ($PC_{vf}$) received from the previous phase (crop plan identification), and a signal that comes from the third phase that indicates if a state transition has occurred (called TrasnSignal), i.e., if the robot has entered or exited the crop rows. This signal is initialised as false, and how it is generated is described later in the explanation of the next phase.

In an embodiment, the first stage of the second phase is to verify that no transition has occurred, defined by the signal TransSignal. If a transition has occurred (the robot has entered or exited one crop row), in an embodiment, the current point cloud is eliminated, in addition to the entire procedure being reset (21) and started again. As the phase/sub-procedures are consecutive (this means that to execute phase two, phase one had to be executed first and it is a continuous process), not only phase 2 is started again but the procedure is started again not only from this phase but from phase one (taking new images by the cameras). Usually, when the procedure is reset, historical information is deleted.

If no transition between states has occurred (the robot has not entered or exited one crop row), the next step is to filter (22) the point cloud and keep only the points present (approx..) on the ground plane. To carry out this filtering, only the points that are in a certain range (for example, ± 0.2 m or any other, this value is a design parameter) around the value 0 on the z-axis are taken, with z being the axis that represents the height. Subsequently, all the remaining points after this filtering are projected to the soil plane (also called the ground plane or the z plane), obtaining a point cloud in 2D in the Cartesian plane defined by the plane of movement of the robot. As an optional supplement, to perform more precise filtering, it is possible to incorporate the measurement of the soil plane obtained by a LIDAR system (23).

Once the points have been filtered and projected on the ground plane, each position is transformed (24) with respect to the robot's reference system, i.e. the previously defined absolute reference frame (ARF). To do this, as a first instance the position and orientation of the robot with respect to the ARF had to be acquired and synchronised with respect to the information from both cameras (RGB and ToF). The output of this transformation is the positions of each of the points of the point cloud but in this case, referenced to the reference frame ARF ($PC_{arf}$). This step will allow: (i) maintaining a history of the positions of each crop detected, (ii) being able to carry out an analysis of the positions of the crops with respect to the position of the robot in the ARF frame, and (iii) enriches the small amount of data that is generated when acquiring the crop positions. This last advantage is important, given that the invention focuses on the detection of crops and their lines in an early stage of growth and, therefore, the information on the position of the crops and the number of crops in every epoch where an image is acquired, is usually scarce.

Furthermore, it could be not convenient to store all the possible crop positions throughout the process, given that many of the measurements may be associated with errors; so once the robot has moved a representative distance (for example, 3 meters or any other, this value is a design parameter), the points behind the robot may be cleaned (flushed, 25). That is the historic of point clouds from a zone behind the robot is deleted. Some errors that can generate inaccuracies in the positioning of crops are, among others: (i) errors in the detection of the centre of the plant, (ii) errors in the projection of the plant position regarding the robot's reference system; and (iii) false positives in plant detection.

New crop detection points are accumulated to old points. Old points refer to points acquired in previous epochs/instants of time. The new points are the points obtained at the instant of time k, while the old points refer to instants of time k-1, k-2, k-n, with n being a positive real number, and k an instant of time. The time instants are defined as the moment in which a new image is acquired. The frequency of image acquisition may be for example between 4 Hz up to 10 Hz (this is only an example and any other frequency value can be used).

All these points subsequently go through a clustering process (27) for the clusterization of the point cloud on the ARF frame. The clustered point clouds obtained are named $Clu_{arf}$ in figure 2. That is, the points obtained are classified through a clustering process, which allows each cloud point ($(x,y,z)$) to be associated with each other, taking into consideration the proximity between the points. This clustering process results in the classification of each point belonging to a cluster of points and can be made using any known clustering technique.

In an embodiment, the clustering involves applying the DBSCAN (Density-Based Spatial Clustering of Applications with Noise) methodology with the configuration parameters described in Table 1 (this is only a non-limitative example and any other clustering methodology and/or any other parameters value can be applied).

Table 1

| Parameter | Value |
| --- | --- |
| Epsilon | 0.2 |
| Minimum samples | 1 |
| Metric | Euclidean |

In an embodiment, after this clustering process, a fusion of the clusters obtained by the clustering methodology is also carried out (28), given that usually, and due to the characteristics of narrow-row crops, a large number of clusters are obtained, many representing a single plant. This cluster merger procedure may consist of the analysis of the positions of the centroids of each cluster with respect to the robot's orientation. If it is identified that the clusters are aligned, the fusion is carried out. That is, the clusters are merged based on certain characteristics that make them similar; these characteristics may be that the centroid of each cluster is aligned with each other and with respect to the orientation of the robot.

In an embodiment for this fusion, first, fundamental values are extracted that represent the cluster's shape, which includes its centroid and a projection both forward and backward of said centroid, referring to the robot's orientation. Next, each unfused cluster is analysed, and the orthogonal distance between both centroids is calculated; if that distance is less than a threshold (for example, 0.15 m or any other, this is a design parameter), the fusion is performed. Below it is presented a pseudocode that can be used to achieve this cluster fusion, that is the pseudocode for executing the procedure for merging clusters (this is only a non-limitative example and other pseudocode or any other cluster fusion methodology can be used).

```
FUNCTION fusionClusters

    keyValues = []

    FOR EACH cluster IN clusterizedPts DO
        data = Extract (X, Y) coordinates from cluster
        unit_vector = Compute unit vector of the data
        p3 = Calculate the 2D centroid of the data
        p1 = p3 + unit_vector
        p2 = p3 - unit_vector
        reference_vector = unit_vector
        keyValues.APPEND([p1, p2, p3])

    idxAlreadyFus = []
    output = []

    FOR EACH clusterIdx FROM 0 TO Length of clusterizedPts DO
        IF clusterIdx is not in idxAlreadyFus:
            idxAlreadyFus.APPEND(clusterIdx)
            output.APPEND(clusterizedLidPts[clusterIdx])

            FOR EACH subClusterIdx FROM 0 TO Length of clusterizedLidPts DO
                IF subClusterIdx is not in idxAlreadyFus:
                    FOR EACH idx1, idx2 IN [[subClusterIdx, clusterIdx]] + [[clusterIdx,
subClusterIdx]] DO
                        p1, p2, p4 = Extract key values of cluster with idx1 index
                        p3 = Extract centroid of cluster with idx2 index
                        pProj, p_error = Compute orthogonal projection between clusters
idx1 & idx2

                    IF Conditions for fusion are met:
                        idxAlreadyFus.APPEND(subClusterIdx)
                        Merge clusters and update output
```

As the output of this second phase (crop row identification), a set of clusters that represents the crop rows, named Rows$_{arf}$, is generated. In other words, Rows$_{arf}$ are the set of clusters that represents 3D points of the row detected, on the ARF frame. These clusters represent the input value of the next phase.

This crop rows can be directly extracted from the merged clusters. In an embodiment, once the clusters have been merged and, by applying linear regression algorithms the line that can be generated by each merged cluster may be estimated.

It should be also pointed out that, as shown in figure 2, for the steps of position transformation (with respect to the robot's ARF), clustering and cluster fusion, information about the position and orientation of the robot may be needed. This information may be acquired (26) from the robot, usually from odometry information obtained by the robot (in other embodiment other location/position systems onboard the robots can be used).

**Guiding of the Robot through the crop rows (Entry-Exit points detection)**

As the last phase to enable the crop-row following, it is necessary to convert the information representing these crop lines into commands/instructions the robot can execute to carry out said following. This (sub-)procedure allows to extract said relevant information, in addition to being able to determine whether the robot has entered or left a crop line

Determining whether the robot has entered or left a crop row is relevant, given that the methodology presented can enable the crop-row following without the need to know a priori the map nor the length of the field. This is a characteristic that differentiates this invention from those that already exist.

In an embodiment, this guiding of the robot may be summarized as it follows (this is only a non-limitative example and, in other embodiments, only some of the steps are performed or different steps are performed or the steps are performed in a different way):

- Each line (row) extracted from phase 2, is examined separately, where its validity is verified through two analyses: (1) that the line must have a sufficient correlation with respect to the orientation of the robot (for example, greater than 90%); (2) that the position of the line with respect to the origin of the robot's reference system is at a distance less than a threshold (this threshold is usually the width between the crop lines). The width between the crop lines is an input parameter that is directly associated with the type of crop.
- When validating the lines, the closest lines to the robot are taken, both to the right and to the left, and a central line is estimated. This is the line that the robot must follow.
- The entire process is repeated until the robot reaches the end of the field. To find out if the end of the field has been reached, for example the clusters in front of the robot are analyzed, and when there are no more clusters at the front, this means that there are no more crops and, therefore, the end of the field has been reached.
- At this point, the robot begins to turn, meaning that it has to return to the field to continue with the treatment. This turn is made using the location systems on board the robot (which can be odometry or GPS). And when the robot makes a 180-degree turn, the crop detection system is activated again, and the guiding process starts again.

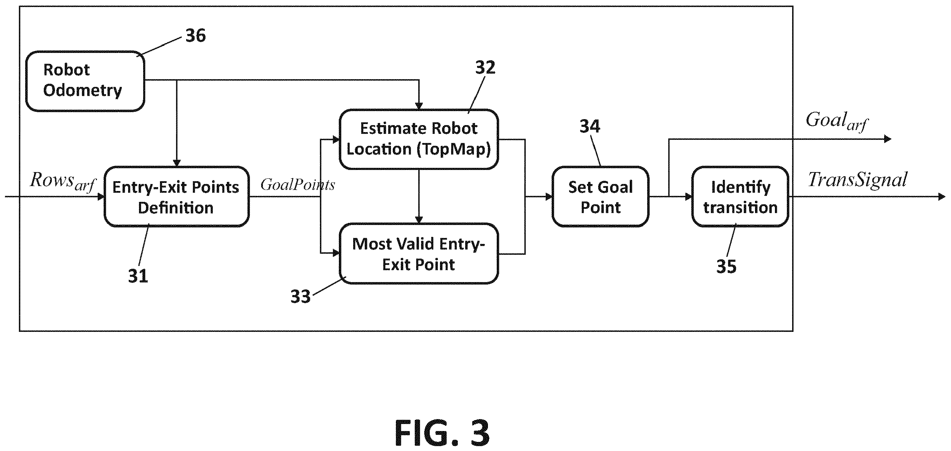

In an embodiment, this guiding is made by explicitly detecting the entry and exit points of each row. Now the (sub-) procedure will be detailly explained, according to the embodiment shown in figure 3. Figure 3 presents a diagram identifying the different steps that are executed to be able to perform this entry-exit points detection to guide the robot. This is only a non-limitative example and, in other embodiments, only some of the steps are performed or different steps are performed or the steps are performed in a different way:

Based on the merged clusters information ($Rows_{arf}$), an analysis is carried out, and some goal points (entry-exit points) are extracted referred to the robot's position (31). These goal points (called GoalPoints) represent both the possible entry and exit points of the crop lines and are estimated both to the right and to the left of the robot. So, in total, about 4 GoalPoints in each time (k) are calculated: 'left_entry', 'left_exit', 'right_entry' and 'right_exit'. To determine these GoalPoints, in an embodiment, the following methodology is followed:

1. Clusters in front and behind the robot are extracted: The clusters are cut (separated) following an imaginary line orthogonal to the robot and its direction of movement to define the front and rear clusters.
2. For the front clusters, the right and left clusters are extracted: the left line and the right line with respect to the direction vector of the robot.
3. For the rear clusters, the right and left clusters are extracted: the left line and the right line with respect to the direction vector of the robot.
4. Once four sets of clusters have been obtained (left_front, right_front, left_rear, right_rear), each set is analysed. To extract the GoalPoints, if the clusters are in front of the robot, the furthest points from the robot belonging to the clusters are taken, and a point is projected with respect to said point at a first preestablished orthogonal distance (for example, 0.2 m or any other, this is a design parameter) with respect to the cluster orientation. On the other hand, if the clusters are at the back (rear) of the robot, the closest points from the robot belonging to the clusters are taken, and a point is projected with respect to said point at a second pre-established orthogonal distance (for example, 0.2 m or any other, this is a design parameter) with respect to the cluster orientation; the first and second pre-established orthogonal distances can be the same or different.

In other words, the closest left and right points (at the rear of the robot), and the furthest left and right points (at the front of the robot) are extracted each time an image is taken. And this way, the 4 GoalPoints ('left_entry', 'left_exit', 'right_entry' and 'right_exit') are obtained. This process assumes that the robot is moving forward; hence a new movement (forward) plus a new image generate new information. As the robot is moving forward, the furthest points in front of the robot represent the main new information, while the closest points behind the robot represent information already consolidated (and filtered). And the fusion between this new information, which may present noise and errors, with the consolidated information, which is more stable but could not represent the description of the lines in front of the robot, is one of the characteristics that makes the result of this invention robust.

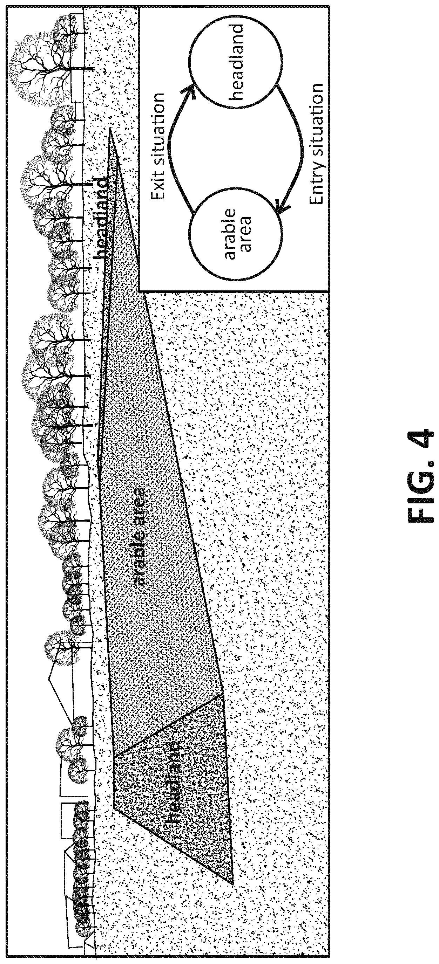

With these *GoalPoints* obtained, two analyses are carried out: 1) to estimate the position of the robot on the topological map of the crop field, and 2) to estimate the reference goal point that the robot must follow to follow the crop row properly. Figure 4 shows the topological map of the field, where two essential working areas are described: 1) the arable area (where the planted crop plants are located) and 2) the headlands (usually without planted crop plants), where the robot performs the tasks to change crop lines (crop rows), better known as U-turn. As shown in figure 4, when the robot moves from the arable area to the headland is an exit situation (the robot is exiting a crop row) and when the robot moves from the headland area to the arable area is an entry situation (the robot is entering a crop row).

In the first instance, the current position of the robot is estimated within the topological map (32). This allows for a more exhaustive analysis of the GoalPoints when estimating the new waypoint of the robot. Therefore, the provided GoalPoints and the current position (location and orientation) of the robot (RobotPose) are utilized to conduct a semantic analysis. This information about location and orientation of the robot may be obtained from positioning systems (36) onboard the robot.

This analysis is aimed at approximating the robot's position within the topological map, which is named as TopLoc. In the following equation, it is shown a way of defining said TopLoc. In this context, the analysis focuses exclusively on recognising the states related to headlands and the arable area. Additionally to these two main working locations, a third state called "unidentified" state is taken into account, signifying situations where there isn't sufficient information from the vision system to determine the robot's location within a particular working area:

$$TopLoc=\{(GoalPoints, RobotPose, m) \mid m \in M= \{headland, arable\_area, unidentified\}\}$$

The above equation means that the TopLoc (that is, if the robot is in the headland, in the arable area or in an unidentified zone) is obtained from the GoalPoints information, the RobotPose information and the different areas of the field.

To do this, the probability that the robot is in each of the different areas of the field is estimated and the estimated topological location of the robot in each moment k ($TopLoc_k$) is obtained following for example this equation (this is only a non-limitative example and other ways of obtaining this estimated location can be used):

$$\begin{cases} TopLoc_k = n_k \leftarrow max\big(P(z_k|m_k)\big) \\ P(z_k|m_k) = \eta \sum Place_{m,k}, m \in M \end{cases}$$

This is a typical statistical formula, where:

k is the current time.

$P(z_k|m_k)$ is the probability that the location of the robot in a time k (variable $z_k$) is in a certain working area of the field (headland, arable area) or is unidentified. In other words, the function $P(z_k|m_k)$ represents the probability of observing measurement $z_k$ given a specific hypothesis or state $m_k$. The summation ($\Sigma$) on m in the set M indicates that all possible states or hypotheses m are considered to calculate the probability of $z_k$ occurring for each of those states m.

$\eta$ is a normalization constant, to make the probability value to be between 0 and 1. $Place_{m,k}$ is an index that represents how aligned the robot is with respect to the field area m, in each instant of time (k).

This previous statistical formula means that the estimated topological location of the robot in an instant k is the area (headland, arable area o unidentified) whose probability is maximum ($n_k$).

To be able to identify at first glance in which part of the field the robot is located, the position and orientation of the robot (*RobotPose*) is compared in two ways, obtaining two indexes (which will be used to calculate the value of $Place_m$ in each moment):

- First index, called cluster index ($CL_{index}$), with respect to the different merged clusters that represent the crop lines ($Rows_{arf}$).
- Second index, called goal index ($G_{index}$), with respect to the last GoalPoints identified, including entry, exit, left and right.

For calculating these indexes, a Mutual Information (MI) method is applied, which is useful for assessing the dependency between one variable and multiple others. In this case a MI index ($MI_{index}$) is calculated as follows:

$$MI(X, Y_i) = \sum P(X, Y_i) \cdot \log_2 \big(P(X, Y_i)/\big(P(X) \cdot P(Y_i)\big)\big)$$

Where X represents a single 2D vector of the robot's orientation (*RobotDir*) in the Cartesian plane of the ARF frame; $Y_i$ represents, for calculating the $CL_{index}$, the 2D vector orientation of cluster $i \in Rows_{arf}$ in the Cartesian plane of the ARF frame; and for the $G_{index}$, the 2D vector orientation of the last Goalpoints $i \in GoalPoints$ in the Cartesian plane of the ARF frame;

In this case the mutual information of one vector (*RobotDir*) with several vectors is calculated. This represents how aligned the robot is with respect to each estimated crop line. And given that there may be several crop lines, it is necessary to carry out the summation ($\Sigma$) of probabilities (P) related to the joint occurrence of alignment between the robot and all crop rows.

$P(X, Y_i)$ is the joint probability distribution between X and $Y_i$;
$P(X)$ is the marginal probability of $X$,
$P(Y_i)$ is the marginal probability of $Y_i$.

And, in this embodiment, the following equation presents the methodology to calculate both $CL_{index}$ and $G_{index}$:

$$\begin{cases} CL_{index} = \sum MI(RobotDir, Y_i) \ for \ Y_i \in Rows_{arf} \\ G_{index} = \sum MI(RobotDir, Y_i) \ for \ Y_i \in GoalPoints \end{cases}$$

Therefore, to calculate $Place_m$ in each instant of time, the following equation is used:

$$\begin{cases} Place_{headland} = \dfrac{CL_{index}}{G_{index}} \times distance\_cluster \\ Place_{arable\_area} = \dfrac{G_{index}}{distance\_cluster} \end{cases}$$

Where distance_cluster is calculated as it follows:

$$distance_{cluster} = \frac{abs(D_b - D_f)}{euclidean(Back, Forw)}$$

Where $D_b$ and $D_f$ are both distance values, and the first is the distance with respect to the rear part of the robot and the closest cluster, and the second is the distance with respect to the front part of the robot and the closest cluster.

Back and Forw are both 2D points that belong to the cluster closest to the robot, and the first represent the closest point with respect to the rear part of the robot and the closest cluster, and the second is the closest point with respect to the front part of the robot and the closest cluster.

Where abs() means the absolute value function and euclidean() refers to the Euclidean distance.

Afterwards, by identifying a change of state (35) by estimating the position of the robot in the field TopLoc, the TransSignal is generated.

As it has been explained above, in order to estimate the topographic location of the robot, a probabilistic calculation is normally used because, typically, the exact map of the field in geographic coordinates is not known, or it is imprecise, i.e. it is not clear, (for example at a centimeter-level), when the headland begins and when the crop lines begin, and this is a very common situation. And this probabilistic strategy allows navigation in a crop field without the need to know the map. Moreover, the position of the robot can be obtained by a GPS system, but it could perfectly be the odometry of the robot (with it is not so precise as the GPS). Of course, if you have an accurate map of the crop field and the GPS location at the centimeter level, this procedure is unnecessary, because the topographic location of the robot can be obtained by comparing the GPS position of the robot with the accurate map of the crop field. But these situations are not real; in real life, an accurate and up-to-date map of the crop field are not commonly available, as well as the GPS location may fail or not be available.

Subsequently, the GoalPoints are analysed and filtered to obtain the most relevant points that describes the point of both exit and entry to the field (33). These points are called Most Valid Entry-Exit Points, and to be calculated, the following procedure is followed, according to an embodiment of the invention (this is only a non-limitative example and other ways of calculating the Entry and Exit Points can be used):

1. All GoalPoints are stored (and they are discarded as the robot passes them a certain distance).
2. When a new point is generated, it is compared with the points stored. If no points are stored, this is stored as the first point. The new point is assigned with a weight (W) of 0.5 since, initially, there is a 50% uncertainty as to whether the point is valid.
3. The comparison process takes into consideration two error elements: 1) the Euclidean distance between the new point and the stored points (*D_error*), and 2) the orthogonal projection of the new point to the stored points (*P_error*), respect to their orientation.
4. If the elements are within a certain range (for example, 0.15 m), this generates a fusion between the new point and the saved point to which it is compared.

5. Then, for each point stored the weight (*W*) is recalculated, between 0 and 1, with value 1 being the most relevant. This recalculated weight del punto (W_new$_i$) is based on the difference between the errors described above and it may be calculated as described in the following equation:

$$W\_new_i = W_i \cdot \left(\frac{D\_error_i}{P\_error_i}\right) \; for \; i \; \in \; stored \; GoalPoints$$

So, according to this equation the recalculated weight (W_new$_i$) for a GoalPoint i, is the previous assigned weight (W$_i$) multiplied by the ratio between the parameters D_error and P_error for said point compared with the rest of store GoalPoints.

Once all weights are recalculated, they are normalized, and the points (two points) with the highest weight correspond to the Most Valid Entry-Exit Points, one GoalPoint for entry (at the rear of the robot) and one GoalPoint for exit (at the front of the robot). In other words, two points with the highest weight are taken, one for the entry and one for the exit (usually, in the memory both type of points are stored in different data structures, to know which point represents which thing, entry or exit).

Once the Goal Point for entry (Most Valid Entry Point) and the GoalPoint for exit (Most Valid Exit Point) are set (34) with respect to the ARF (Goal$_{arf}$), these are the points that the robot uses to perform guidance in the field. If the robot is in the headland, it seeks to reach the Most Valid Entry Point, while if it is in the arable area, it seeks to get the coordinates of the Most Valid Exit Point. These points are updated every time a new image is acquired, so this cycle allows the crop rows to be followed.

Then the transition (between a Headland and the Arable or vice versa) is identified (35) and the TransSignal (the signal that defines if a transition has occurred on the topological map localization) is correspondingly generated. Actually, when the estimated topologic location (TopLoc) in an instant (k) is different from the location in the previous moment in which TopLoc has been calculated, the TransSignal signal is activated.

It should be also pointed out that, as shown in figure 3, for some of the steps of this sub-procedure (for example the calculation of GoalPoints, 31 or the Estimation of the robot location, 32) information about the position and orientation of the robot may be needed. This information may be acquired (36) from the robot, usually from odometry information obtained by the robot (in other embodiment other location/position systems onboard the robots can be used)

Summarizing, in general terms, the whole procedure has the following main steps, according to an embodiment of the invention:

With the robot moving or steady, the colour (e.g. RGB) camera and the ToF camera take crop pictures. Several epochs (colour images plus 3D information) may be taken.

The colour camera pictures are analysed using object detection algorithms, and as a result the crop plants are identified on the pictures (using bounding boxes). A plant can be identified by several points (pixels).

The plants are 3D located based on the information from the ToF camera. The plant positions are transformed into the ARF (e.g. using geometric algorithms).

The points with similar features (i.e., points close to each other) are associated as clusters by applying clusterisation algorithms.

Clusters are fused based on their orientations and the location of their centroid with respect to the vehicle's (robot) orientation. Crop rows are extracted from the clusters (using mathematical techniques, including linear regression algorithms).

The coordinates to be followed by the robot (guiding line) is determined. In order to do that, in an embodiment, the equidistant lines between two consecutive lines of crop rows are the line to be followed by the robots. In some real fields, with early-stage crops this is not so easy to perform, so a precise and thorough process as the one disclosed in the embodiments previously explained is used. In this process, the detection of Entry and Exit points of the crop rows is also considered.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for detecting crop rows and guide an autonomous robot in an agricultural task in an early-stage crop field, the method being performed by at least one electronic processor and comprising the following steps:

   a) Obtaining one color image taken by a color camera and one image taken by a Time of Flight, ToF, camera, both cameras located onboard the autonomous robot and where the capture of images by both cameras is synchronized;
   b) Identifying crop plants by analyzing the color image, using an object detection technique resulting in an estimated location of the crop plants in the color image defined as a bounding box for each identified crop plant;
   c) Obtaining a point cloud of crop locations, $PC_{vf}$, by associating points of the point cloud from the ToF camera image with the pixels identified as belonging to a crop plant;
   d) Transforming the position of points of $PC_{vf}$ to an autonomous robot's absolute reference frame, ARF;
   e) Classifying the points referenced to the ARF, $PC_{arf}$, in clusters taking into consideration the proximity between the points;
   f) Merging the obtained clusters based on certain characteristics of the clusters, where said characteristics comprises their position and/or orientation with respect to the robot's orientation;
   g) From the merged clusters, estimating updated guiding coordinates to be followed by the robot; and
   h) Determining if the robot has exited the field and if it has not exited the field, repeat the method from step a).

2. The method according to claim 1, where step g) comprises:

   g1) From the merged clusters, estimating the furthest left and right points at the front and the closest left and right points at the rear of the robot at a current moment and storing them;
   g2) Compare said estimated points with previously stored points and assigning weights to each stored point, where said assigned weight depend on the distance and orientation differences between the new stored points and the already stored points;
   g3) Selecting the stored points with the highest weight, at the rear and the front of the robot respectively, as the entry and exit points of the crop row where the robot is located;
   g4) Updating the coordinates to be followed by the robot taking into account the selected exit point.

3. The method according to claim 1, where step g) comprises:

   g1) Extracting estimated crop rows from the merged clusters, using linear regression algorithms;
   g2) Determining the validity of the extracted crop rows, wherein a crop row is considered valid when it has a correlation with respect to the orientation of the robot higher than a preestablished first threshold and its position with respect to the origin of the robot's reference system is at a distance less than a second threshold, wherein said second threshold depends on the pre-established width between the crop rows;
   g3) Taking the closest valid rows to the right and to the left of the robot and estimating a central line, which corresponds to the updated guiding coordinates to be followed by the robot.

4. The method according to any of the previous claims, wherein in step c) points of the point cloud from the ToF camera image are associated to the pixels belonging to the centroid of each bounding box and said associated points form the point cloud $PC_{vf}$.

5. The method according to any of the previous claims where the images are taken when the autonomous robot is moving or steady, and the agricultural task is laser weeding.

6. The method according to any of the previous claims, where in step f) two clusters are merged if the centroid of the clusters are aligned with each other and with respect to the orientation of the robot.

7. The method according to any of the previous claims, where step h) comprises:

   - Estimating a topographic location of the robot for the current moment, where the estimated topographic location of the robot is in an arable area of the field or in a headland of the field, where the topographic location of the robot is probabilistically estimated based on the current geolocated position and orientation of the robot and in estimated entry and exit points of the row;
   - If said estimated location is the arable area, then it is determined that the robot has not exited the field.

8.  The method according to any of the previous claims, where in step h) it is determined that the robot has not exited the field when there are clusters at the front of the robot.

9.  The method according to any of the previous claims, where step h) further comprises: if it has been determined that the robot has exited the field, turning the robot to enter again the field and going to step a)

10. The method according to any of the previous claims, where steps a)-c) are repeated several times, before going to step d) in order to enrich the crop plant detection.

11. The method according to any of the previous claims, where in step d), before the transformation is performed, a filtering is carried out by taking only the points of $PC_{vf}$ that are in a certain pre-established range around the value 0 on the *z-axis* and then all the remaining points are projected to the soil plane, and wherein the soil plane is identified with respect to the ARF using on machine vision or a LIDAR system to obtain measurements of the soil plane.

12. The method according to any of the previous claims where the color camera and the ToF camera are previously calibrated.

13. The method according to any of the previous claims, where the object detection is based on convolutional neural networks, and wherein the machine learning model for identifying individual crop plants is trained with a database buildup of a set of images taken in crop fields in a stage of early growth.

14. A system for detecting crop rows and guide an autonomous robot in an agricultural task in an early-stage crop field, the system comprising:

    - A color camera located onboard the autonomous robot;
    - A ToF camera located onboard the autonomous robot, where the captures of images of the ToF camera and the color camera is synchronized;
    - One or more processors configured to:

        a) Obtain one color image taken by the color camera and one image taken by a Time of Flight, ToF, camera;
        b) Identify crop plants by analyzing the color image, using an object detection technique resulting in an estimated location of the crop plants in the color image defined as a bounding box for each identified crop plant;
        c) Obtaining a point cloud of crop locations, $PC_{vf}$, by associating points of the point cloud from the ToF camera image with the pixels identified as belonging to a crop plant;
        d) Transform the position of points of $PC_{vf}$ to an autonomous robot's absolute reference frame, ARF;
        e) Classify the points referenced to the ARF, $PC_{arf}$, in clusters taking into consideration the proximity between the points;
        f) Merge the obtained clusters based on certain characteristics of the clusters, where said characteristics comprises their position and/or orientation with respect to the robot's orientation;
        g) From the merged clusters, estimate updated guiding coordinates to be followed by the robot; and
        h) Determine if the robot has exited the field and if it has not exited the field, go back to step a).

15. A non-transitory digital data storage medium for storing a computer program which comprises instructions causing a computer executing the program to perform the method according to any of the claims 1-13.

**FIG. 1**

**FIG. 2**

EP 4 575 699 A1

**FIG. 3**

FIG. 4

Europäisches
Patentamt

European
Patent Office

Office européen
des brevets

# EUROPEAN SEARCH REPORT

**Application Number**

EP 23 38 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMMI L ET AL: "A hybrid representation of the environment to improve autonomous navigation of mobile robots in agriculture", PRECISION AGRICULTURE, vol. 22, no. 2, 2 January 2021 (2021-01-02), pages 524-549, XP037421292, ISSN: 1385-2256, DOI: 10.1007/S11119-020-09773-9 * "Algorithm for semantic location and mapping"; page 539 - page 531; figure 2c * * Row identification and key location estimation; page 531 - page 533 * * page 535 - page 536; figure 5 * * Guidance control and map update; page 537 * ----- -/-- | 1-15 | INV. G05D1/648 G05D1/243 A01B79/00 G01S17/00 G06V20/00 ADD. G05D105/15 G05D107/20 G05D109/10 G05D111/10 |

**TECHNICAL FIELDS SEARCHED (IPC)**

G05D

The present search report has been drawn up for all claims

| Place of search | Date of completion of the search | Examiner |
|---|---|---|
| Munich | 19 March 2024 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 38 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIU RUICHENG ET AL: "Field estimation of maize plant height at jointing stage using an RGB-D camera", THE CROP JOURNAL, [Online] vol. 10, no. 5, 1 October 2022 (2022-10-01), pages 1274-1283, XP093142237, NL ISSN: 2214-5141, DOI: 10.1016/j.cj.2022.07.010 Retrieved from the Internet: URL:https://pdf.sciencedirectassets.com/28 7552/1-s2.0-S2214514122X00068/1-s2.0-S2214 514122001805/main.pdf?X-Amz-Security-Token =IQoJb3JpZ2luX2VjEMr//////////wEaCXVzLWVhc 3QtMSJGMEQCIA8/AL1lKu2nihuhDugVFspAZFvLahu F3wWFo4MjqHnFAiBPNoGU6/dZ5lTUkhI5ntVxyp4S2 zAN7z7Bkyxl+scH4Cq7BQjS//////////8BEAUaDDA 1OTAwMzU0N> [retrieved on 2024-03-18] * the whole document * ───── | 1-15 | |
| A | ERTAI LIU ET AL: "Vision-based Vineyard Navigation Solution with Automatic Annotation", ARXIV.ORG, CORNELL UNIVERSITY LIBRARY, 201 OLIN LIBRARY CORNELL UNIVERSITY ITHACA, NY 14853, 25 March 2023 (2023-03-25), XP091469063, * the whole document * ───── | 1-15 | **TECHNICAL FIELDS SEARCHED (IPC)** |
| A | US 11 363 754 B2 (BEAR FLAG ROBOTICS INC [US]) 21 June 2022 (2022-06-21) * the whole document * ───── | 1-15 | |

The present search report has been drawn up for all claims

| Place of search | Date of completion of the search | Examiner |
|---|---|---|
| Munich | 19 March 2024 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 38 3311

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | | Publication date |
|---|---|---|---|---|---|
| US 11363754 | B2 | 21-06-2022 | EP | 3826449 A1 | 02-06-2021 |
| | | | US | 2020029488 A1 | 30-01-2020 |
| | | | US | 2020029489 A1 | 30-01-2020 |
| | | | US | 2020029490 A1 | 30-01-2020 |
| | | | US | 2022272890 A1 | 01-09-2022 |
| | | | US | 2024077883 A1 | 07-03-2024 |
| | | | WO | 2020023745 A1 | 30-01-2020 |

EPO FORM P0459

For more details about this annex : see Official Journal of the European Patent Office, No. 12/82